# EUROPEAN PATENT SPECIFICATION

(11) **EP 2 093 943 B1**
(45) Date of publication and mention of the grant of the patent: **10.04.2013**
(21) Application number: 07785448.7
(22) Date of filing: 24.08.2007
(51) Int. Cl.: H04L 12/70, H04L 29/06

(54) **A METHOD, FORWARDING ENGINE AND COMMUNICATION DEVICE FOR MESSAGE ACCES CONTROL**
EIN VERFAHREN, WEITERREICHPROZESS UND KOMMUNIKATIONSGERÄT FÜR NACHRICHTENZUGANGSKONTROLLE
PROCÉDÉ, MOTEUR DE RETRANSMISSION ET DISPOSITIF DE COMMUNICATION POUR LA COMMANDE D'ACCÈS AUX MESSAGES

(30) Priority: 29.12.2006 CN 200610064671
(43) Date of publication of application: 26.08.2009
(73) Proprietor: Huawei Technologies Co., Ltd., Longgang District, Shenzhen Guangdong 518129 (CN)
(72) Inventor: SONG, Duanzhi, Guangdong 518129 (CN); YANG, Ping'an, Guangdong 518129 (CN); XIONG, Yi, Guangdong 518129 (CN)
(74) Representative: Körber, Martin Hans
(86) International application number: PCT/CN2007/070551
(87) International publication number: WO 2008/080314

(56) References cited:
- EP-A2- 1 560 398
- WO-A1-02/35374
- WO-A2-2006/069041
- CN-A- 1 738 290
- CN-A- 1 859 293
- CN-A- 1 863 161
- CN-A- 1 996 939
- US-A- 5 864 554

## Description

### FIELD OF THE INVENTION

The present invention relates to communication technologies, and in particular, to a packet access control method, a forwarding engine, and communication apparatus.

### BACKGROUND

With increase of the traffic over the Internet, stricter performance requirements are imposed on data communication network apparatus. The network apparatus with pure software forwarding is eliminated gradually, and more apparatus uses hardware forwarding to improve the performance.

Compared with software forwarding, hardware forwarding is less flexible. Many functions are impossible or almost impossible by relying solely on hardware forwarding engines such as Application-Specific Integrated Circuit (ASIC) and Network Processing Unit (NPU). Therefore, general network apparatus needs to provide both hardware forwarding and a device such as CPU which implements the functions unachievable by a forwarding engine in order to fulfill both performance and flexibility. Data communication apparatus includes a data plane and a control plane. The data plane includes a hardware forwarding engine, a switching network, and a physical-layer interface, and is adapted to forward most data packets. The control plane includes a CPU and peripheral devices such as memory, and is adapted to manage and control devices and handle the data packets, such as routing protocol packets and network management interaction packets, that need participation of software.

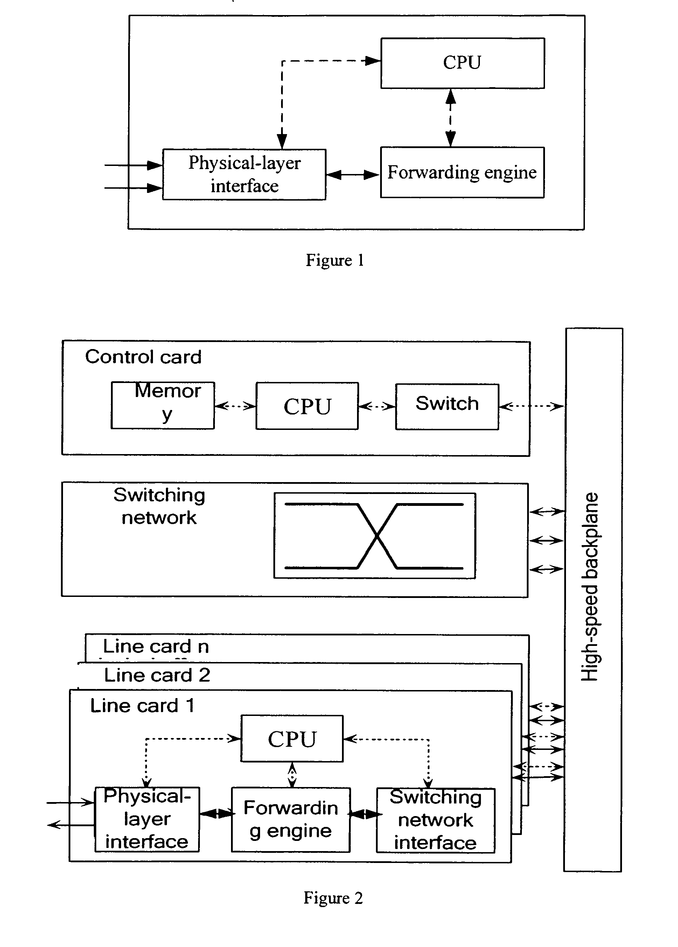

Figure 1 shows a typical structure of centralized data communication network apparatus and Figure 2 shows a typical structure of distributed data communication network apparatus, where a solid line represents the path for forwarding packets, and a dotted line represents the channel of a control packet or control message.

Generally, most packets received by the network apparatus can find the destination directly inside the data plane, and are sent to the destination. However, some packets still need participation of the control plane, for example, the protocol packet exchanged between network apparatus (most typically, routing protocol packets), the packet sent by other terminal or apparatus to the local apparatus such as the configuration request sent from the network management system, and the packet that passes through the local apparatus but needs special treatment such as IP packet and Time To Live (TTL) timeout packet.

After such packets are identified by the forwarding engine, they are sent through the channel between the forwarding engine and the CPU (hereinafter referred to as a "control channel") to the CPU for processing; as well, some packets of the CPU are forwarded from the forwarding engine through the control channel. It is to be noted that the control plane includes not only the CPU on the line card but also the CPU on the control card, regarding the typical distributed data communication apparatus shown in Figure 2. Therefore, control channels include not only the channel between the forwarding engine and the CPU on the line card, but also the channel between the CPU on the line card and the CPU on the control card.

In such architecture, as restricted by the processing capability of the CPU and the bandwidth of the control channel, the network apparatus is vulnerable to intentional or unintentional Denial of Service (DoS) attacks (unintentional attacks may result from worms or network storms). If the traffic sent on the data plane is too large in a short time, the control channel may be congested, and the sent packets may be lost. If the traffic sent on the control plane is too large, the CPU is busy handling a certain type of sent packets and has no time for other processing.

Both consequences mentioned above may lead to faults of apparatus or network. Prevention of such attacks is essential to network apparatus.

Generally, the forwarding engine judges whether a packet that needs to be sent is based on some fields in the content of the packet, for example, destination IP address, protocol number, and port number. However, the packet determined by the forwarding engine as needed to be sent may be futile to the control plane (the packets futile to the control plane are called "trash packets"). The trash packets, which do not need to be sent but are actually sent, account for a great proportion of the total traffic of the sent packets.

The causes for such a consequence are: Although network apparatus supports multitudinous functions, it is possible that only a tiny portion of the functions of the apparatus are active in a specific scenario, and the remaining functions are inactive. After the packets attributable to the inactive functions are sent to the control plane, they are processed, found as futile, and discarded in the end. However, such packets occupy both bandwidth of the control channel and processing time of the CPU. Once the traffic of such packets is too large, it may be impossible to send normal packets or handle normal services in time, and the DoS attacks mentioned above may occur.

A practice in the conventional art is:
The forwarding engine categorizes the packets to be sent, and imposes a bandwidth limit on each category of packets, where the bandwidth is configurable. Once the traffic of a type of packets is relatively large in the apparatus and such packets are futile to the current service, the bandwidth configuration may be modified according to the current configuration of the apparatus to restrict the sending of such packets and prevent DoS attacks.

However, in order not to affect normal services, the default value of the bandwidth set for different packets is generally high to prevent problems from occurring at the time of using the service corresponding to such packets. If default parameter values are used to process the sent packets, trash packets may still occupy a large amount of bandwidth of the control channel. Moreover, it is difficult to exercise precise control (for example, only a specific type of packets from a specific source address is allowed to be sent) based on the packet category only.

To tackle such a problem, another practice of the conventional art is to configure an Access Control List (ACL) manually. Before sending the packet into the control channel, the forwarding engine queries the specific ACL rules configured for the apparatus, and performs a proper operation according to the action corresponding to the hit rule. The operation may be: discarding the packet, or restricting the bandwidth of this type of packets. A common practice is to configure information on packets that need to be discarded in the ACL. In this case, the apparatus maintainers need to be fairly aware of the implementation details of the apparatus. The configuration cost is high, and errors tend to occur. Consequently, some trash packets are still sent to the CPU, and it is still difficult to prevent trash packets from occupying too much bandwidth of the control channel, and difficult to exercise precise control. Another practice is to configure information on packets that need to be sent to the CPU for processing in the ACL, and discard the packets not configured. In this case, manual configuration is required, and a strict requirement is imposed on the person who performs the configuration. Some packets related to the service implementation may be configured mistakenly, and are discarded mistakenly, which disrupts normal service operation. In the case that a new service or connection is set up, the ACL needs to be configured again if no ACL rule is configured beforehand, which deteriorates the efficiency of service operation.

WO 2006/069041 A2 discloses a network processing device with a novel architecture for conducting firewall and other network interface management operations. A Unified Policy Management architecture uses a same memory and processing structure to integrate firewall policy management with routing and switching decisions. A Reconfigurable Semantic Processor uses a parser to identify different syntactic elements that are then used by one or more Semantic Processing Units to carry out different firewall, network interface, routing, switching, and other packet processing operations.

EP 1560398 A2 discloses a packet rate limiting method and system for detecting and blocking the effects of DoS attacks on IP networks. The method uses an ACL counter that stores an action parameter in the first 3 most significant bits and uses 13 bits as a packet counter. A rate limit is enforced by setting the packet counter to an initial value, and resetting this value at given intervals of time. The action parameter enables the ACL to accept or deny packets based on this rate limit. If the number of packets in the incoming flow saturates the packet counter before the reset time, the packets are denied access to the network until the counter is next reset.

### SUMMARY

A packet access control method, a forwarding engine, and communication apparatus are provided in various embodiments of the present invention to implement both precise control and service operation stability.

A packet access control method provided in an embodiment of the present invention includes:
querying an Access Control List, ACL, according to information on a received packet if the received packet does not need to be forwarded, and
if the packet hits the ACL rule, either sending the packet to a control plane
through the bandwidth available from a second bandwidth parameter, or, if a judgment is made on whether to discard the packet, discarding the packet or sending the packet to the control plane through the bandwidth available from the second bandwidth parameter,
or, if no ACL rule is hit, sending the packet to the control plane through bandwidth available from a first bandwidth parameter.

The information on the packet comprises at least one of the following: source IP address, destination IP address, source port, destination port and protocol number; and
the bandwidth available from the second bandwidth parameter is higher than the bandwidth available from the first bandwidth parameter.

A packet forwarding engine provided in an embodiment of the present invention includes a setting module, a storing module, a receiving module, a forwarding judging module, an access control module, and a processing module, as detailed below.

The setting module is adapted to set bandwidth parameters.

The storing module is adapted to store and update the ACL.

The receiving module is adapted to receive packets.

The forwarding judging module is adapted to judge whether the packet needs to be forwarded according to the information on the packet received by the receiving module.

The access control module is adapted to query ACL rules in the ACL and query the ACL rules stored in the storing module according to the information on the packet after the forwarding judging module determines that the packet does not need to be forwarded.

The processing module is adapted to: either send the packet received by the receiving module to a control plane by applying a second bandwidth parameter set by the setting module, or, if a judgment is made on whether to discard the packet, discard the packet or send the packet received by the receiving module to a control plane by applying a second bandwidth parameter set by the setting module if the ACL rule is hit, or send the packet received by the receiving module to a control plane by applying a first bandwidth parameter set by the setting module if no ACL rule is hit.
The bandwidth available from the second bandwidth parameter is higher than the bandwidth available from the first bandwidth parameter, and

the information on the packet comprises at least one of the following: source IP address, destination IP address, source port, destination port and protocol number.
Communication apparatus provided in an embodiment of the present invention includes: a control unit, adapted to configure the ACL and handle packets; and a data unit, adapted to: set bandwidth parameters and judge whether the received packet needs to be forwarded according to the information on the received packet; query the ACL configured by the control unit according to the information on the packet if the packet does not need to be forwarded; and either send the packet received by the receiving module to a control plane by applying a second bandwidth parameter set by the setting module, or, if a judgment is made on whether to discard the packet, discard the packet or send the packet received by the receiving module to a control plane by applying a second bandwidth parameter set by the setting module if an ACL rule is hit, or send the packet to the control unit by applying a first bandwidth parameter if no ACL rule is hit.
The data unit comprises the packet forwarding engine;
The bandwidth available from the second bandwidth parameter is higher than the bandwidth available from the first bandwidth parameter, and

The information on the packet comprises at least one of the following: source IP address, destination IP address, source port, destination port and protocol number.

Through the packet access control method, packet forwarding engine, and communication apparatus provided by the present invention, the technical solution under the present invention presets the packet access control and configures a bandwidth parameter for the packet which hits no ACL rule. Therefore, while reducing the influence caused by the known trash packets onto the control plane of the apparatus, the present invention prevents the packets required for service implementation from being discarded, ensures normal operation of services, and improves stability of the apparatus and availability of the whole network.

### BRIEF DESCRIPTION OF THE DRAWINGS

Figure 1 shows a typical structure of centralized data communication network apparatus in the conventional art;

Figure 2 shows a typical structure of distributed data communication network apparatus in the conventional art;

Figure 3 is a flowchart of a packet access control method provided in an embodiment of the present invention;

Figure 4 shows a packet forwarding engine provided in an embodiment of the present invention; and

Figure 5 shows communication apparatus provided in an embodiment of the present invention.

### DETAILED DESCRIPTION

In the embodiments of the present invention, the forwarding engine queries the ACL according to the information on the packet, and performs the corresponding action if an ACL rule is hit, or configures a bandwidth parameter for the packet and sends it to the control plane such as CPU if no ACL rule is hit.

An ACL may be an ordinary ACL or a special ACL. An ordinary ACL includes quintuplet information (namely, source IP address, destination IP address, source port, destination port, and protocol number). A special ACL includes only partial fields of a quintuplet, for example, includes only the source port field or source IP address field.

In an embodiment of the present invention, the forwarding engine needs to set the first bandwidth parameter. For a packet not configured in the ACL but required for service implementation, the packet may be sent through the bandwidth available from the first bandwidth parameter. Therefore, the packet is never discarded mistakenly for failure of hitting the ACL, and service operation exception never occurs for such a reason. The first bandwidth parameter may be set randomly. Preferably, the first bandwidth parameter is set to less than half of the total bandwidth. Besides, a second bandwidth parameter may be set. In the case that the packet hits the ACL and the packet needs to be sent to the control plane according to the ACL rules, the packet may be sent through the bandwidth available from the second bandwidth parameter. The value of the second bandwidth parameter may be greater than the value of the first bandwidth parameter so that the packet which hits the ACL and needs to be sent obtains a higher bandwidth than the packet which does not hit the ACL.

An ACL is configured in many ways. It may be configured manually; or, in the operation process of the apparatus, the apparatus reconfigures the ACL or updates the existing ACL. The packet which does not hit the ACL rules can still obtain a bandwidth. Therefore, when a new service or connection is set up successfully, the packet not configured in the ACL can still be sent to the control plane for processing, especially to the CPU. For example, the communication apparatus configures the ACL rules, delivers the action corresponding to the ACL rules, or deletes the ACL rules according to the currently configured service or the session set up with other apparatus or terminal.

When the apparatus configures a new service, the packet is sent over the bandwidth available from the first bandwidth parameter to the control plane for processing if the packet related to the new service is not configured in the ACL beforehand. The control plane judges whether the packet related to the new service is correlated with a specific service, namely, whether the packet related to the new service needs to be processed by the control plane all along. If the packet related to the new service needs to be processed by the control plane all along, the control plane sends the corresponding ACL rules, or concurrently, sends the information on the priority corresponding to such a type of packets according to importance of the service, to update the existing ACL. For example, the apparatus may allow the terminal to manage the apparatus through Telnet. In order to fulfill this function, the Telnet service needs to be configured and enabled for the apparatus, and a login right needs to be set so that only one terminal or certain terminals are allowed to log in to the apparatus (preventing illegal login). In light of the characteristics of the Telnet packet (the destination port number is 23, and the protocol number is the Transfer Control Protocol (TCP)) and the information on the IP address of the restricted terminals, three information elements, namely, source IP address, destination port, and protocol number, are extracted from the quintuplet to form the corresponding ACL rules which are sent to the data plane.

In the case that the network apparatus on the control plane sets up a session (TCP connection) with other apparatus or terminal dynamically, if the control plane analyzes and determines that the session is set up successfully according to the information on the current session, the control plane sends the corresponding ACL rule, or concurrently, sends the information on the priority corresponding to such a type of packets according to importance of the session, to update the existing ACL. For example, before exchanging route information through a route protocol, two routers A and B need to authenticate each other in order to prevent login of illegal terminals. The authentication process generally requires several attempts of handshake interaction. In the several attempts of handshake interaction, A and B tell their own information to the opposite party, possibly including encrypted information about the password to be authenticated. After authenticating each other successfully, A and B set up the session (connection) properly. After the protocol connection is set up, the control plane of the apparatus combines the elements (for example, the elements of a quintuplet: source IP address, destination IP address, source port, destination port, and protocol number) that identify the connection into the corresponding ACL rules, which are sent to the data plane.

In the foregoing method of configuring the ACL, the information elements in the quintuplet (namely, source IP address, destination IP address, source port, destination port, and protocol number) may be combined randomly into an ordinary ACL or special ACL. The corresponding action is configured according to the ACL; or concurrently, the information on the priority corresponding to such a type of packets is delivered according to importance of the service or session; or additionally, the configuration may be: the packet is discarded only if the packet matches the ACL.

In order to make the technical solution, objectives, and merits of the present invention clearer, a detailed description of the present invention is hereinafter given by reference to accompanying drawings and preferred embodiments.

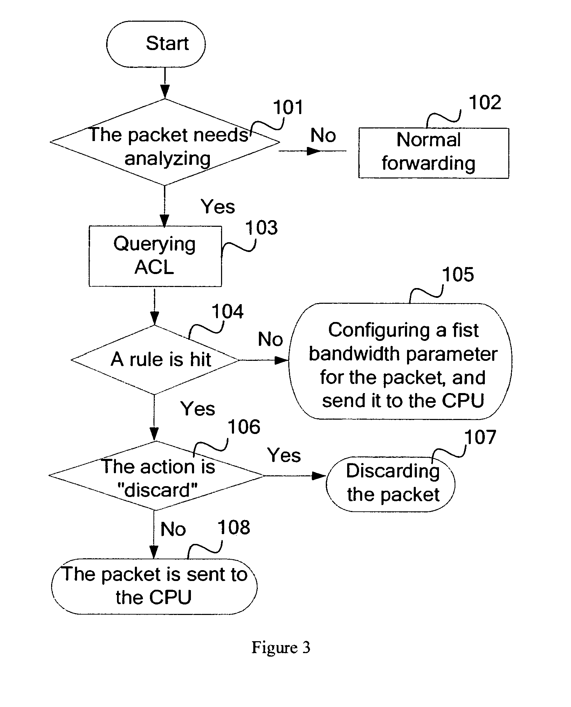

In an embodiment of the packet access control method under the present invention, various parameters and the ACL may be set beforehand, or not set beforehand. Figure 3 is a flowchart of a packet access control method provided in an embodiment of the present invention. The method includes the following steps:

Step101: The forwarding engine judges whether the packet needs to be forwarded according to the packet information. If the packet does not need to be forwarded, the process proceeds with step 103; or else step 102.

Generally, the packet needs to be analyzed in the following circumstances:
(1) The packet of the apparatus (for example, FTP packet, and Telnet packet) needs to be sent.
(2) The broadcast or multicast protocol packet (for example, route protocol packet, and ARP request packet) needs to be sent.
(3) If the packet by way of the apparatus is found incorrect in the processing process, the packet needs to be sent when the packet source needs to be notified, for example, when the destination is unreachable.

The forwarding engine makes a judgment by querying a specific table. If forwarding of an IP packet is involved, the forwarding engine may query the forwarding table. If the packet is ready for being forwarded directly, the process proceeds with step 102 where the packet is forwarded normally without being sent to the control plane; otherwise, the process proceeds with step 103.

Step 102: The packet is forwarded normally.

Step 103: The forwarding engine queries the ACL according to the packet information.

One more step is optional: Before the packet is sent to the control plane as required, a check is made on whether an ACL exists. If an ACL exists, the ACL is queried according to step 103; if no ACL exists, the packet is still sent to the control plane, but the packet is sent through the bandwidth available from the first bandwidth parameter in order to prevent all the bandwidth from being occupied.

Step 104: A judgment is made on whether an ACL rule is hit according to the contents in the ACL.

Step 105: The packet is sent to the control plane such as CPU through the bandwidth available from the first bandwidth parameter if no ACL rule is hit. Generally, the first bandwidth parameter is set to less than half of the total bandwidth, namely, the bandwidth configured for the packet which hits no ACL rule is relatively low.

Step 106: If an ACL rule is hit, a judgment is made on whether the corresponding action is to discard the packet. If the action is to discard the packet, the process proceeds with step 107; or else step 108. If no discarding action is set, this step may be omitted, and step 108 is performed only if an ACL rule is hit.

Step 107: The packet is discarded.

Step 108: The packet is sent to the control plane such as CPU. In this step, the packet is sent through the bandwidth available from the second bandwidth parameter, or concurrently, through the set priority. For example, the packet of higher priority is sent to the CPU through the bandwidth available from the second bandwidth parameter first. Preferably, the value of the second bandwidth parameter is greater than the value of the first bandwidth parameter, thus ensuring that the packet hitting the ACL rule obtains higher bandwidth and the packet not hitting the ACL rule obtains lower bandwidth.

If the control plane determines that the packet needs to be further routed after analyzing the packet sent through the bandwidth available from the first bandwidth parameter, the control plane sends the ACL rule according to the packet information, stipulates the specific action, sends such information to the forwarding engine, updates the existing ACL, and adds the packet information and the corresponding action into the ACL. Especially, if no ACL exists, the control generates an ACL according to the processing of the control plane, and sends the ACL to the forwarding engine.

Finally, after the configuration of a service is cancelled or a session is released, the corresponding ACL rule may be deleted.

In this embodiment, each step is not sequence-sensitive, and all step numbers are designed for ease of description.

In the embodiments of the present invention, if no ACL is stored in the apparatus or no ACL rule is hit, the packet may still be sent to the control plane through the bandwidth available from the first bandwidth parameter. Therefore, both precise control and service operation stability are taken good care of, and a supplement to the ACL is available, thus avoiding that some packets required for service implementation are discarded mistakenly for failure of hitting the ACL, and avoiding service operation exception caused thereby. In this sense, the stability of apparatus and the availability of the whole network are improved effectively, and the normal operation of the service is ensured.

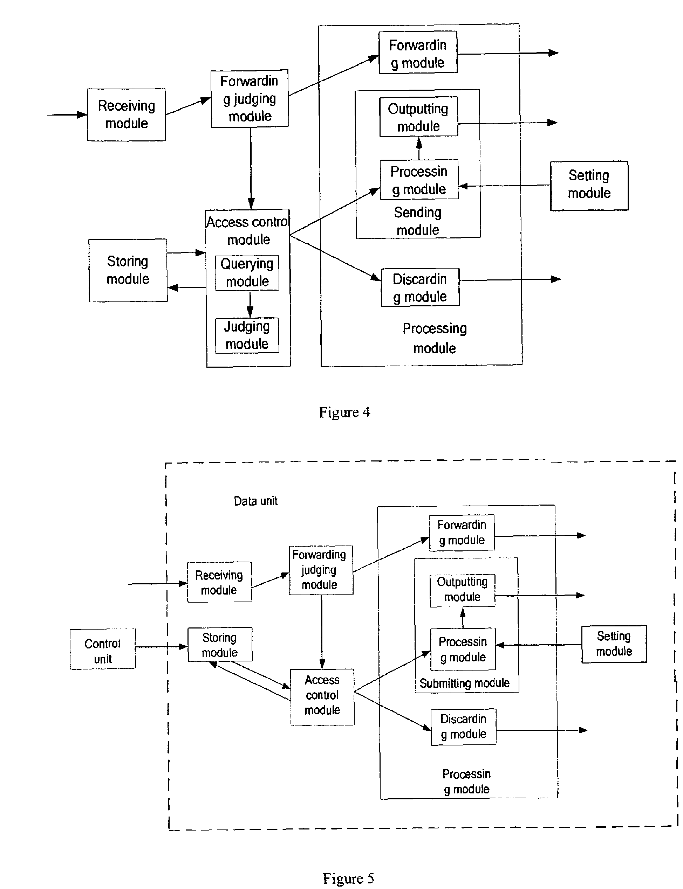

As shown in Figure 4, a packet forwarding engine provided in an embodiment of the present invention includes: a setting module, a storing module, a receiving module, a forwarding judging module, an access control module, and a processing module, as detailed below.

The setting module is adapted to set a bandwidth parameter. In this embodiment, the setting module is adapted to set the first bandwidth parameter and the second bandwidth parameter. The method and the objective of setting the parameters are described in the foregoing method embodiment, and not repeated here any further.

The storing module is adapted to store and update the ACL.

The receiving module is adapted to receive packets.

The forwarding judging module is adapted to judge whether the packet needs to be forwarded according to the information on the packet received by the receiving module, where the packet information generally includes at least one of the following: source IP address, destination IP address, source port, destination port and protocol number.

The access control module is adapted to query ACL rules stored in the storing module according to the information on the packet received by the receiving module after the forwarding judging module determines that the packet does not need to be forwarded. The access control module further includes: a querying module, adapted to query whether any ACL is stored in the storing module if the forwarding judging module determines that the packet does not need to be forwarded. In this embodiment, the ACL is not necessarily set beforehand; and a judging module, adapted to query the ACL rules stored in the storing module according to the information on the packet received by the receiving module if the querying module finds an ACL.

The access control module is adapted to query ACL rules stored in the storing module according to the information on the packet received by the receiving module after the forwarding judging module determines that the packet does not need to be forwarded. The access control module further includes: a querying module, adapted to query whether any ACL is stored in the storing module if the forwarding judging module determines that the packet does not need to be forwarded. In this embodiment, the ACL is not necessarily set beforehand; and a judging module, adapted to query the ACL rules stored in the storing module according to the information on the packet received by the receiving module if the querying module finds an ACL.

If the querying module finds no ACL, the processing module sends the packet received by the receiving module to the control plane by applying the first bandwidth parameter set by the setting module. That is, if no ACL exists, the packet can still be sent to the control plane directly through minor bandwidth. After the packet is sent to the control plane, the ACL is delivered to the forwarding engine according to the corresponding analysis. The forwarding engine reduces the impact caused by known trash packets onto the control plane of the apparatus and prevents the packets required for service implementation from being discarded mistakenly, thus ensuring normal service operation and improving stability of apparatus and availability of the whole network effectively.

If the access control module determines that an ACL rule stored in the storing module is hit, the sending module applies the second bandwidth parameter set by the setting module to the packet received by the receiving module on the precondition that a second bandwidth parameter is set by the setting module, and then sends the packet to the control plane.

The processing module is adapted to perform the corresponding action if the access control module determines that an ACL rule is hit, or send the packet received by the receiving module to the control plane by applying the first bandwidth parameter set by the setting module if no ACL rule is hit.

The processing module includes a forwarding module, adapted to normally forward the packet received by the receiving module after the forwarding judging module determines that the packet needs to be forwarded.

The processing module further includes: a discarding module, adapted to discard the packet received by the receiving module according to the hit ACL rule; and a sending module, adapted to send the packet received by the receiving module to the control plane.

Moreover, the present invention discloses a type of communication apparatus. As shown in Figure 5, the communication apparatus includes a control unit and a data unit. The control unit is adapted to configure the ACL and handle packets.

The data unit is adapted to: set the first bandwidth parameter; judge whether the packet needs to be forwarded according to the packet information, upon arrival of a packet; query the ACL configured and delivered by the control unit according to the packet information if the packet does not need to be forwarded; perform the corresponding action if an ACL rule is hit; or send the packet to the control unit by applying the first bandwidth parameter to the packet if no ACL rule is hit.

Especially, the data unit may include a packet forwarding engine provided by the present invention. Moreover, after analyzing the packet sent through the bandwidth available from the first bandwidth parameter, the control unit delivers the ACL rule according to the packet information and stipulates the specific action if determining that the packet needs further sending in the future. If determining that the packet needs no further sending, the control unit may also send the ACL, but stipulates the action as discarding the packet. Afterwards, the control unit delivers such information to the storing module of the forwarding engine to update the ACL already existent in the storing module. If no ACL is already existent, the control unit creates an ACL according to such information, and stores the ACL in the forwarding engine.

The apparatus includes the forwarding engine provided by this embodiment, and a bandwidth parameter is configured for the packet which hits no ACL rule. Moreover, through the configuration of packet access control, while reducing the impact caused by the known trash packets onto the control plane of the apparatus, the present invention prevents the packets required for service implementation from being discarded, ensures normal operation of services, and improves stability of the apparatus and availability of the whole network.

It is understandable to those skilled in the art that all or part of the modules (units) or steps in the foregoing embodiments can be realized through hardware based on a program. The program may be stored in a computer-readable storage medium such as ROM/RAM, magnetic disk and compact disk. Alternatively, each module (unit) or step is made into an integrated circuit module respectively, or several modules (units) or steps are made into a single integrated circuit module. Therefore, the present invention is not limited to any specific combination of hardware and software.

Although the invention has been described through exemplary embodiments, the invention is not limited to such embodiments. It is apparent that those skilled in the art can make various modifications and variations to the invention without departing from the scope of the invention, and such modifications and variations are covered by the protection scope of the present invention.

## Claims

1. A packet access control method, comprising the steps of:
querying an Access Control List, ACL, according to packet information, if the received packet does not need to be forwarded (103), and
if the packet hits the ACL rule, either sending the packet to a control plane through the bandwidth available from a second bandwidth parameter (108), or, if a judgment is made on whether to discard the packet (106), discarding the packet (107) or sending the packet to the control plane through the bandwidth available from the second bandwidth parameter (108),
or, if no ACL rule is hit, sending the packet to the control plane through bandwidth available from a first bandwidth parameter (105), wherein:
the packet information comprises at least one of the following: source IP address, destination IP address, source port, destination port and protocol number; and
the bandwidth available from the second bandwidth parameter is higher than the bandwidth available from the first bandwidth parameter.

2. The method of claim 1, further comprising setting the second bandwidth parameter.

3. The method of claim 1, further comprising:
judging whether the packet needs to be forwarded according to packet information; judging whether the ACL exists if determining that the packet does not need to be forwarded; and querying the ACL according to the packet information if the ACL exists.

4. The method of claim 1, claim 2, or claim 3, further comprising:
presetting a priority parameter for the packet, and sending the packet to the control plane according to a priority level corresponding to the priority parameter.

5. The method of claim 1, claim 2, or claim 3, further comprising:
configuring ACL rules for the packet according to the packet information related to a service or session if the packet is related to the service configured by network apparatus where a forwarding engine is installed; and
sending the ACL rules to the forwarding engine, and updating the ACL.

6. The method of claim 1, claim 2, or claim 3, further comprising:
configuring the ACL rules of the packet according to the packet information related to the session after a session connection is set up dynamically between the network apparatus where the forwarding engine is installed and other network apparatus; and
sending the ACL rules to the forwarding engine, and updating the ACL.

7. A packet forwarding engine, comprising:
a setting module, adapted to set bandwidth parameters;
a storing module, adapted to store and update an Access Control List, ACL;
a receiving module, adapted to receive a packet;
a forwarding judging module, adapted to judge whether the packet needs to be forwarded according to packet information received by the receiving module;
an access control module, adapted to query ACL rules in the ACL, and query the ACL rules stored in the storing module according to the packet information after the forwarding judging module determines that the packet does not need to be forwarded; and
a processing module, adapted to either send the packet received by the receiving module to a control plane by applying a second bandwidth parameter set by the setting module, or, if a judgment is made on whether to discard the packet, discard the packet or send the packet received by the receiving module to a control plane by applying a second bandwidth parameter set by the setting module if the ACL rule is hit, or send the packet received by the receiving module to a control plane by applying a first bandwidth parameter set by the setting module if no ACL rule is hit;
wherein the bandwidth available from the second bandwidth parameter is higher than the bandwidth available from the first bandwidth parameter, and
the packet information comprises at least one of the following: source IP address, destination IP address, source port, destination port and protocol number.

8. The packet forwarding engine of claim 7, wherein the access control module comprises:
a querying module, adapted to query whether any ACL is stored in the storing module if the forwarding judging module determines that the packet does not need to be forwarded; and
a judging module, adapted to query ACL rules stored in the storing module according to the packet information received by the receiving module after the querying module finds the ACL,
wherein if the querying module determines that no ACL exists, the processing module is adapted to send the packet received by the receiving module to the control plane by applying the first bandwidth parameter set by the setting module.

9. The packet forwarding engine of claim 7 or claim 8, wherein the processing module comprises:
a forwarding module, adapted to forward the packet received by the receiving module after the forwarding judging module determines that the packet needs to be forwarded.

10. The packet forwarding engine of claim 7 or claim 8, wherein the processing module further comprises:
a discarding module, adapted to discard the packet received by the receiving module according to the hit ACL rule; and
a sending module, adapted to send the packet received by the receiving module to the control plane according to the hit ACL rule.

11. The packet forwarding engine of claim 10, wherein
the setting module is adapted to set a second bandwidth parameter; and
the sending module is adapted to send the packet to the control plane by applying the second bandwidth parameter if the packet needs to be sent to the control plane according to the hit ACL rule.

12. A communication apparatus comprising the packet forwarding engine according to any one of claims 9 to 13, wherein the communication apparatus further comprises:
a control unit, adapted to configure an Access Control List, ACL, and process a packet; and
a data unit, adapted to: set bandwidth parameters and judge whether a received packet needs to be forwarded according to packet information; query the ACL configured by the control unit according to the packet information, if the packet does not need to be forwarded; and either send the packet received by the receiving module to a control plane by applying a second bandwidth parameter set by the setting module, or, if a judgment is made on whether to discard the packet, discard the packet or send the packet received by the receiving module to a control plane by applying a second bandwidth parameter set by the setting module if an ACL rule is hit, or send the packet to the control unit by applying a first bandwidth parameter if no ACL rule is hit, wherein the data unit comprises the packet forwarding engine;
wherein the bandwidth available from the second bandwidth parameter is higher than the bandwidth available from the first bandwidth parameter, and
the packet information comprises at least one of the following: source IP address, destination IP address, source port, destination port and protocol number.

## Patentansprüche

1. Paketzugriffs-Steuerverfahren, das die folgenden Schritte umfasst:
Abfragen einer Zugriffssteuerliste, ACL (Access Control List), in Übereinstimmung mit Paketinformationen, falls das empfangene Paket nicht weitergeleitet werden muss (103), und
falls das Paket die ACL-Regel trifft, entweder Senden des Pakets zu einer Steuerebene durch die verfügbare Bandbreite von einem zweiten Bandbreitenparameter (108) oder, falls eine Beurteilung erfolgt, ob das Paket verworfen werden muss (106), Verwerfen des Pakets (107) oder Senden des Pakets zu der Steuerebene durch die Bandbreite, die von dem zweiten Bandbreitenparameter (108) verfügbar ist,
oder, falls keine ACL-Regel getroffen wird, Senden des Pakets zu der Steuerebene durch Bandbreite, die von einem ersten Bandbreitenparameter (105) verfügbar ist, wobei:
die Paketinformationen wenigstens eines der Folgenden umfassen: Quell-IP-Adresse, Ziel-IP-Adresse, Quell-Port, Ziel-Port und Protokollnummer; und
die Bandbreite, die von dem zweiten Bandbreitenparameter verfügbar ist, höher ist als die Bandbreite, die von dem ersten Bandbreitenparameter verfügbar ist.

2. Verfahren nach Anspruch 1, das ferner das Einstellen des zweiten Bandbreitenparameters umfasst.

3. Verfahren nach Anspruch 1, das ferner Folgendes umfasst:
Beurteilen, ob das Paket weitergeleitet werden muss, in Übereinstimmung mit Paketinformationen; Beurteilen, ob die ACL existiert, falls bestimmt wird, dass das Paket nicht weitergeleitet werden muss; und Abfragen der ACL in Übereinstimmung mit den Paketinformationen, falls die ACL existiert.

4. Verfahren nach Anspruch 1, Anspruch 2 oder Anspruch 3, das ferner Folgendes umfasst:
im Voraus Einstellen eines Prioritätsparameters für das Paket und Senden des Pakets zu der Steuerebene in Übereinstimmung mit einem Prioritätsgrad entsprechend dem Prioritätsparameter.

5. Verfahren nach Anspruch 1, Anspruch 2 oder Anspruch 3, das ferner Folgendes umfasst:
Konfigurieren von ACL-Regeln für das Paket in Übereinstimmung mit den Paketinformationen, die mit einem Dienst oder einer Sitzung in Beziehung stehen, falls das Paket mit dem Dienst in Beziehung steht, der durch eine Netzvorrichtung konfiguriert ist, in der eine Weiterleitungsmaschine installiert ist; und
Senden der ACL-Regeln zu der Weiterleitungsmaschine und Aktualisieren der ACL.

6. Verfahren nach Anspruch 1, Anspruch 2 oder Anspruch 3, das ferner Folgendes umfasst:
Konfigurieren der ACL-Regeln des Pakets in Übereinstimmung mit den Paketinformationen, die mit der Sitzung in Beziehung stehen, nachdem eine Sitzungsverbindung zwischen der Netzvorrichtung, wo die Weiterleitungsmaschine installiert ist, und einer weiteren Netzvorrichtung dynamisch eingerichtet worden ist;
und
Senden der ACL-Regeln zu der Weiterleitungsmaschine und Aktualisieren der ACL.

7. Paketweiterleitungsmaschine, die Folgendes umfasst:
ein Einstellmodul, das dafür ausgelegt ist, Bandbreitenparameter einzustellen;
ein Speichermodul, das dafür ausgelegt ist, eine Zugriffssteuerliste, ACL (Access Control List), zu speichern und zu aktualisieren;
ein Empfangsmodul, das dafür ausgelegt ist, ein Paket zu empfangen;
ein Weiterleitungsbeurteilungsmodul, das dafür ausgelegt ist, zu beurteilen, ob das Paket weitergeleitet werden muss, in Übereinstimmung mit Paketinformationen, die von dem Empfangsmodul empfangen werden;
ein Zugriffssteuermodul, das dafür ausgelegt ist, ACL-Regeln in der ACL abzufragen und die ACL-Regeln, die in dem Speichermodul gespeichert sind, in Übereinstimmung mit den Paketinformationen abzufragen, nachdem das Weiterleitungsbeurteilungsmodul bestimmt hat, dass das Paket nicht weitergeleitet werden muss; und
ein Verarbeitungsmodul, das dafür ausgelegt ist, entweder das von dem Empfangsmodul empfangene Paket zu einer Steuerebene durch Anwenden eines durch das Einstellmodul eingestellten zweiten Bandbreitenparameters zu senden oder
dann, wenn eine Beurteilung erfolgt, ob das Paket verworfen werden muss, das Paket zu verwerfen oder das Paket, das von dem Empfangsmodul empfangen wird, zu einer Steuerebene durch Anwenden eines zweiten Bandbreitenparameters, der durch das Einstellmodul eingestellt wird, zu senden, falls die ACL-Regel getroffen wird, oder
das von dem Empfangsmodul empfangene Paket zu einer Steuerebene durch Anwenden eines ersten Bandbreitenparameters, der durch das Einstellmodul eingestellt wird, zu senden, falls keine ACL-Regel getroffen wird;
wobei die Bandbreite, die von dem zweiten Bandbreitenparameter verfügbar ist, höher ist als die Bandbreite, die von dem ersten Bandbreitenparameter verfügbar ist, und
wobei die Paketinformationen wenigstens eines der Folgenden umfassen: Quell-IP-Adresse, Ziel-IP-Adresse, Quell-Port, Ziel-Port und Protokollnummer.

8. Paketweiterleitungsmaschine nach Anspruch 7, wobei das Zugriffssteuermodul Folgendes umfasst:
ein Abfragemodul, das dafür ausgelegt ist, abzufragen, ob irgendeine ACL in dem Speichermodul gespeichert ist, falls das Weiterleitungsbeurteilungsmodul bestimmt, dass das Paket nicht weitergeleitet werden muss; und
ein Beurteilungsmodul, das dafür ausgelegt ist, ACL-Regeln, die in dem Speichermodul gespeichert sind, in Übereinstimmung mit den Paketinformationen, die von dem Empfangsmodul empfangen werden, abzufragen, nachdem das Abfragemodul die ACL gefunden hat,
wobei dann, wenn das Abfragemodul bestimmt, dass keine ACL existiert, das Verarbeitungsmodul dafür ausgelegt ist, das von dem Empfangsmodul empfangene Paket zu der Steuerebene durch Anwenden des ersten Bandbreitenparameters, der durch das Einstellmodul eingestellt wird, zu senden.

9. Paketweiterleitungsmaschine nach Anspruch 7 oder Anspruch 8, wobei das Verarbeitungsmodul Folgendes umfasst:
ein Weiterleitungsmodul, das dafür ausgelegt ist, das von dem Empfangsmodul empfangene Paket weiterzuleiten, nachdem das Weiterleitungsbeurteilungsmodul bestimmt hat, dass das Paket weitergeleitet werden muss.

10. Paketweiterleitungsmaschine nach Anspruch 7 oder Anspruch 8, wobei das Verarbeitungsmodul ferner Folgendes umfasst:
ein Verwerfungsmodul, das dafür ausgelegt ist, das von dem Empfangsmodul empfangene Paket in Übereinstimmung mit der getroffenen ACL-Regel zu verwerfen; und
ein Sendemodul, das dafür ausgelegt ist, das von dem Empfangsmodul empfangene Paket zu der Steuerebene in Übereinstimmung mit der getroffenen ACL-Regel zu senden.

11. Paketweiterleitungsmaschine nach Anspruch 10, wobei
das Einstellmodul dafür ausgelegt ist, einen zweiten Bandbreitenparameter einzustellen; und
das Sendemodul dafür ausgelegt ist, das Paket zu der Steuerebene durch Anwenden des zweiten Bandbreitenparameters zu senden, falls das Paket zu der Steuerebene in Übereinstimmung mit der getroffenen ACL-Regel gesendet werden muss.

12. Kommunikationsvorrichtung, die die Paketweiterleitungsmaschine nach einem der Ansprüche 9 bis 13 umfasst, wobei die Kommunikationsvorrichtung ferner Folgendes umfasst:
eine Steuereinheit, die dafür ausgelegt ist, eine Zugriffssteuerliste, ACL (Access Control List), zu konfigurieren und ein Paket zu verarbeiten; und
eine Dateneinheit, die dafür ausgelegt ist: Bandbreitenparameter einzustellen und in Übereinstimmung mit Paketinformationen zu beurteilen, ob ein empfangenes Paket weitergeleitet werden muss; die ACL, die durch die Steuereinheit in Übereinstimmung mit den Paketinformationen konfiguriert ist, abzufragen, falls das Paket nicht weitergeleitet werden muss; und entweder das Paket durch das Empfangsmodul zu einer Steuerebene durch Anwenden eines zweiten Bandbreitenparameters, der durch das Einstellmodul eingestellt wird, zu senden oder
dann, wenn eine Beurteilung erfolgt, ob das Paket zu verwerfen ist, das Paket zu verwerfen, oder das Paket, das von dem Empfangsmodul empfangen wird, zu einer Steuerebene durch Anwenden eines zweiten Bandbreitenparameters, der durch das Einstellmodul eingestellt wird, zu senden, falls eine ACL-Regel getroffen wird, oder
das Paket zu der Steuereinheit durch Anwenden eines ersten Bandbreitenparameters zu senden, falls keine ACL-Regel getroffen wird, wobei die Dateneinheit die Paketweiterleitungsmaschine umfasst;
wobei die Bandbreite, die von dem zweiten Bandbreitenparameter verfügbar ist, höher ist als die Bandbreite, die von dem ersten Bandbreitenparameter verfügbar ist, und
die Paketinformationen wenigstens eines der Folgenden umfassen: Quell-IP-Adresse, Ziel-IP-Adresse, Quell-Port, Ziel-Port und Protokollnummer.

## Revendications

1. Procédé de commande d'accès aux paquets, comprenant les étapes suivantes :
l'interrogation d'une Liste de Commande D'Accès, ACL, en fonction d'informations de paquet, si le paquet reçu n'a pas à être réacheminé (103), et
si le paquet satisfait la règle ACL, soit l'envoi du paquet à un plan de commande par le biais de la largeur de bande prévue par un second paramètre de largeur de bande (108), soit, s'il est jugé qu'il convient ou non de rejeter le paquet (106), le rejet du paquet (107) ou l'envoi du paquet au plan de commande par le biais de la largeur de bande prévue par le second paramètre de largeur de bande (108), ou, si aucune règle ACL n'est satisfaite, l'envoi du paquet au plan de commande par le biais de la largeur de bande prévue par un premier paramètre de largeur de bande (105), dans lequel :
les informations de paquet comprennent au moins l'une des informations suivantes :
adresse IP source, adresse IP destinataire, port source, port destinataire et numéro de protocole ; et
la largeur de bande prévue par le second paramètre de largeur de bande est supérieure à la largeur de bande prévue par le premier paramètre de largeur de bande.

2. Procédé selon la revendication 1, comprenant en outre le réglage du second paramètre de largeur de bande.

3. Procédé selon la revendication 1, comprenant en outre :
le jugement que le paquet doit ou non être réacheminé en fonction des informations de paquet ; le jugement que l'ACL existe ou non s'il est jugé que le paquet n'a pas à être réacheminé, et l'interrogation de l'ACL en fonction des informations de paquet si l'ACL existe.

4. Procédé selon la revendication 1, 2 ou 3, comprenant en outre :
le préréglage d'un paramètre de priorité du paquet, et l'envoi du paquet au plan de commande en fonction d'un niveau de priorité correspondant au paramètre de priorité.

5. Procédé selon la revendication 1, 2 ou 3 , comprenant en outre :
la configuration de règles ACL pour le paquet en fonction des informations de paquet relatives à un service ou une session si le paquet concerne le service configuré par un appareil de réseau où un moteur de réacheminement est installé ; et
l'envoi des règles ACL au moteur de réacheminement, et l'actualisation de l'ACL.

6. Procédé selon la revendication 1, 2 ou 3, comprenant en outre :
la configuration des règles ACL du paquet en fonction des informations de paquet relatives à la session après l'établissement dynamique d'une connexion de session entre l'appareil de réseau dans lequel le moteur de réacheminement est installé et un autre appareil de réseau ; et
l'envoi des règles ACL au moteur de réacheminement, et l'actualisation de l'ACL.

7. Moteur de réacheminement de paquet, comprenant :
un module de réglage, adapté pour régler des paramètres de largeur de bande ;
un module de mémorisation, adapté pour mémoriser et actualiser une Liste de Commande d'Accès, ACL ;
un module de réception, adapté pour recevoir un paquet ;
un module de jugement de réacheminement, adapté pour juger que le paquet doit ou non être réacheminé en fonction d'informations de paquet reçues par le module de réception ;
un module de commande d'accès, adapté pour interroger des règles ACL dans l'ACL, et interroger les règles ACL mémorisées dans le module de mémorisation en fonction des informations de paquet après que le module de jugement de réacheminement détermine que le paquet n'a pas à être réacheminé ; et
un module de traitement, adapté pour soit envoyer le paquet reçu par le module de réception à un plan de commande en appliquant un second paramètre de largeur de bande réglé par le module de réglage, ou, s'il est jugé qu'il convient ou non de rejeter le paquet, rejeter le paquet ou envoyer le paquet reçu par le module de réception à un plan de commande en appliquant un second paramètre de largeur de bande réglé par le module de réglage si la règle ACL est satisfaite, ou envoyer le paquet reçu par le module de réception à un plan de commande en appliquant un premier paramètre de largeur de bande réglé par le module de réglage si aucune règle ACL n'est satisfaite ;
dans lequel la largeur de bande prévue par le second paramètre de largeur de bande est supérieure à la largeur de bande prévue par le premier paramètre de largeur de bande, et
les informations de paquet comprennent au moins l'une des informations suivantes :
adresse IP source, adresse IP destinataire, port source, port destinataire et numéro de protocole.

8. Moteur de réacheminement de paquet selon la revendication 7, dans lequel le module de commande d'accès comprend :
un module d'interrogation, adapté pour interroger si une ACL quelconque est mémorisée ou non dans le module de mémorisation si le module de jugement de réacheminement détermine que le paquet n'a pas à être réacheminé ; et
un module de jugement, adapté pour interroger les règles ACL mémorisées dans le module de mémorisation en fonction des informations de paquet reçues par le module de réception après que le module d'interrogation trouve l'ACL,
dans lequel si le module d'interrogation détermine qu'il n'existe aucune ACL, le module de traitement est adapté pour envoyer le paquet reçu par le module de réception au plan de commande en appliquant le premier paramètre de largeur de bande réglé par le module de réglage.

9. Moteur de réacheminement de paquet selon la revendication 7 ou 8, dans lequel le module de traitement comprend :
un module de réacheminement, adapté pour réacheminer le paquet reçu par le module de réception après que le module de jugement de réacheminement détermine que le paquet doit être réacheminé.

10. Moteur de réacheminement de paquet selon la revendication 7 ou 8, dans lequel le module de traitement comprend en outre :
un module de rejet, adapté pour rejeter le paquet reçu par le module de réception en fonction de la règle ACL satisfaite ; et
un module d'envoi, adapté pour envoyer le paquet reçu par le module de réception au plan de commande en fonction de la règle ACL satisfaite.

11. Moteur de réacheminement de paquet selon la revendication 10, dans lequel le module de réglage est adapté pour régler un second paramètre de largeur de bande ; et
le module d'envoi est adapté pour envoyer le paquet au plan de commande en appliquant le second paramètre de largeur de bande si le paquet doit être envoyé au plan de commande en fonction de la règle ACL satisfaite.

12. Appareil de communication, comprenant le moteur de réacheminement de paquet selon l'une quelconque des revendications 9 à 13, l'appareil de communication comprenant en outre :
une unité de commande, adaptée pour configurer une Liste de Commande d'Accès, ACL, et traiter un paquet ; et
une unité de données, adaptée pour : régler des paramètres de largeur de bande et juger qu'un paquet reçu doit ou non être réacheminé en fonction d'informations de paquet ; interroger l'ACL configurée par l'unité de commande en fonction des informations de paquet, si le paquet n'a pas à être réacheminé ; et soit envoyer le paquet reçu par le module de réception à un plan de commande en appliquant un second paramètre de largeur de bande réglé par le module de réglage, soit, s'il est jugé qu'il convient ou non de rejeter le paquet, rejeter le paquet ou envoyer le paquet reçu par le module de réception à un plan de commande en appliquant un second paramètre de largeur de bande réglé par le module de réglage si une règle ACL est satisfaite, ou envoyer le paquet à l'unité de commande en appliquant un premier paramètre de largeur de bande si aucune règle ACL n'est satisfaite, l'unité de données comprenant le moteur de réacheminement de paquet ;
dans lequel la largeur de bande prévue par le second paramètre de largeur de bande est supérieure à la largeur de bande prévue par le premier paramètre de largeur de bande, et
les informations de paquet comprennent au moins l'une des informations suivantes :
adresse IP source, adresse IP destinataire, port source, port destinataire et numéro de protocole.
